# EUROPEAN PATENT SPECIFICATION

(11) **EP 2 703 819 B1**
(45) Date of publication and mention of the grant of the patent: **21.04.2021**
(21) Application number: 13181483.2
(22) Date of filing: 23.08.2013
(51) Int. Cl.: G01N 35/00, B01F 15/00, B01F 11/00

(54) **Sample processing apparatus and sample processing method**
Probenverarbeitungsvorrichtung und Probenverarbeitungsverfahren
Appareil de traitement d'échantillons et procédé de traitement d'échantillons

(30) Priority: 30.08.2012 JP 2012190359
(43) Date of publication of application: 05.03.2014
(73) Proprietor: SYSMEX CORPORATION, Kobe-shi, Hyogo 651-0073 (JP)
(72) Inventor: Hamada, Yuuichi, Kobe-shi, Hyogo 651-0073 (JP); Nagai, Takaaki, Kobe-shi, Hyogo 651-0073 (JP)
(74) Representative: Hoffmann Eitle

(56) References cited:
- EP-A1- 1 672 370
- EP-A2- 0 410 645
- WO-A1-93/20440
- JP-A- H11 304 817
- US-A- 4 120 662
- US-A1- 2007 048 185
- US-A1- 2007 189 926
- US-A1- 2008 318 306
- US-A1- 2012 314 528

## Description

### FIELD OF THE INVENTION

The present invention relates to a sample processing apparatus for aspirating a sample from a sample tube and performing a processing on the aspirated sample, such as analysis, preparation of smear, or the like. The present invention also relates to a sample processing method employing a sample processing apparatus.

### BACKGROUND

A sample processing apparatus for processing the whole blood sample collected from a subject is known as a blood cell analyzer, a smear preparation device, and the like. Whole blood sample contains blood cells. Blood cells form a sediment with lapse of time. Therefore, in sample processing apparatus, agitation of whole blood sample is performed before performing processing of the whole blood sample.

US 6,818,182 discloses a processing apparatus for processing a blood product. The apparatus picks up a sample tube with a pickup mechanism, and rotates the blood collecting tube by rotating the pickup mechanism to overturn and agitate the sample in the blood collecting tube. US7,028,831 discloses a system including a specimen mixing device. The specimen mixing device includes a mounting plate which is rotatably mounted. As it rotates, it acts to lift and invert a rack secured to the mounting plate, thereby mixing the specimens within the tubes. US7,879,292 discloses a blood analyzer, which includes a holder for gripping and removing a sample tube held in a rack. By rotating the holder, the gripped sample tube is swung.

Since an amount of sample consumed for a measurement of blood cells in a blood cell analyzer is defined, at least the predefined amount of sample needs to be collected from the patient. However, in the cases of infants, toddlers, children, or critically ill patients, it is sometimes difficult to collect the predefined amount of sample. Thus, many blood cell analyzers are enabled to perform a measurement of blood cells on samples of lower volume (referred to as "low volume sample") than the amount of normal of samples.

Several proposals have been made in order to enable an automatic measurement of blood cells of such low volume samples by the apparatuses described in the prior art. For example, a sample tube having a similar size with a sample tube for normal sample has been proposed. The sample tube disclosed in US5,384,096 can be set to a cassette (sample rack) disclosed in US6,818,182, in a similar manner with a normal sample tube. This sample tube can also be set in a sample rack disclosed in US7,028,831 as well as a rack disclosed in US7,879,292. The sample can be automatically agitated and blood cells can be automatically measured by setting the sample tube in such sample racks.

Furthermore, US 2008/318306 A1 relates to a device for supplying blood tubes to a whole blood analyzer including a pre-analytical module with a tube stirrer for homogenizing blood, which is located on a tube transfer line between a tube storage and a tube analyzer.

In addition, JP H11 304817 relates to a device for shortening the stirring time of a dispenser by adjusting the suction/discharge quantity and the stirring frequency according to the residual quantity of the to-be-stirred sample.

Finally, US 2007/189926 A1 relates to a device for supplying a whole blood analyzer with blood tubes comprising agitating means, first transporting means for transporting blood tubes to the agitating means, second transporting means for transporting mixed blood tubes to a sampling point of the analyzer, and manipulating means for placing blood tubes from the first transporting means in the agitating means and for removing blood tubes from the agitating means and placing them in the second transporting means.

US 2007/0048185 A1 discloses a hematological analyzer on whole blood, for analyzing bloods contained in tubes, wherein the tubes are brought and treated in tube mode by the tube. The analyzer includes stirring device for receiving a blood tube and stirring the blood tube according to a selected stirring mode, a controller connected to the stirring device for stirring the blood tube under conditions controlled according to specific parameters and a sampling mechanism for extracting a blood sample in the blood tube previously stirred by the stirring device and transferring the blood sample to an analyzing unit. The analyzer is applicable in particular to hematological analyzers for blood cell count.

In the apparatuses disclosed in the prior art, an agitation operation carried out on the low volume samples is not distinguished from the agitation operation carried out on the normal sample tube. That is, even if an agitation is carried out on a low volume of sample, it is agitated in same manner with normal sample tubes. It might work well with the normal sample tube in order to sufficiently agitate the sample within it, but may
not work with the low volume sample, and agitation failure of the low volume of sample may occur.

### SUMMARY OF THE PRESENT INVENTION

In light of the foregoing, it is an object of the present invention to provide a sample processing apparatus and a sample processing method employing it capable of suppressing the occurrence of agitation failure even in the case of the sample tube for low volume samples.

A sample processing apparatus according to the present invention is defined by claim 1.

According to above configuration, it becomes possible to differentiate an agitation condition applied for first type of sample tube and an agitation condition applied for second type of sample tube containing a lower volume of sample, according to the type of sample tube. Therefore, by setting an agitating condition that allows a sufficient agitation of the second type of sample tube, it is possible to suppress the occurrence of an agitation failure.

Dependent claims relate to preferred embodiments.

According to some preferred embodiments, the first agitation condition includes a first time period for agitation, and the second agitation condition includes a second time period for agitation longer than the first time period.

According to some preferred embodiments, the first agitation condition includes a first number of times of agitation, and the second agitation condition includes a second number of times of agitation greater than the first number of times.

According to some preferred embodiments, the first agitation condition includes repeating the cycle for a first time period, and the second agitation condition includes repeating the cycle for a second time period longer than the first time period.

According to some preferred embodiments, the cycle is repeated for a first number of times in the first agitation condition, and the cycle is repeated for a second number of times greater than the first number of times in the second agitation condition.

According to some preferred embodiments, the cycle in the first agitation condition is performed in a first time period, and the cycle in the second agitation condition is performed in a second time period longer than the first time period.

According to some preferred embodiments, the identifying means includes a reading means for reading identification information given to the sample tube and identifies the type of sample tube on the basis of the identification information read by the reading means.

The sample processing apparatus may further comprise a transporting means for transporting a sample rack holding one or more the sample tubes, and characterized in that the identifying means acquires information of the sample rack transported by the transporting means and identifies the type of sample tube held in the sample rack on the basis of the information acquired from the sample rack.

According to some preferred embodiments, the agitating means includes a take-out means for taking out the sample tube from the sample rack, agitates the sample tube taken out.

The sample processing apparatus may further comprise an aspirating means for aspirating a sample with a pipette and be characterized in that the aspirating means passes the pipette through a lid of the agitated sample tube to aspirate the sample within the sample tube by the pipette; and the processing means processes the sample aspirated with the aspirating means.

A sample processing method according to the present invention is defined by claim 11.

### BRIEF DESCRIPTION OF THE DRAWINGS

Fig. 1 is a perspective view showing an outer appearance of a sample processing apparatus according to a first embodiment;
Fig. 2 is a schematic view showing a configuration of the sample processing apparatus according to the first embodiment;
Fig. 3 is a perspective view showing a configuration of an aspirating container and a peripheral portion thereof;
Fig. 4 is a perspective view showing a configuration of a sample tube transporting section;
Fig. 5 is a block diagram showing a configuration of a control device;
Fig. 6A is a partial cross-sectional side view showing a configuration of a sample tube for normal samples;
Fig. 6B is a partial cross-sectional side view showing a configuration of a sample tube for low volume samples;
Fig. 7 is a flowchart showing a procedure for the operation of the control device of the sample
processing apparatus according to the first embodiment;
Fig. 8 is a flowchart showing a procedure for the agitation operation in the sample processing apparatus according to the first embodiment;
Fig. 9 is a schematic view describing overturning and agitation of the sample;
Fig. 10 is a graph describing the sample agitation in a normal sample mode of the sample processing apparatus according to the first embodiment;
Fig. 11 is a graph describing the sample agitation in a low volume sample mode of the sample processing apparatus according to the first embodiment;
Fig. 12 is a flowchart showing a procedure for the agitation operation in the sample processing apparatus according to a second embodiment;
Fig. 13 is a graph describing the sample agitation in the low volume sample mode of the sample processing apparatus according to the second embodiment;
Fig. 14 is a flowchart showing a procedure for the agitation operation in the sample processing apparatus according to a third embodiment;
Fig. 15 is a graph describing the sample agitation in the low volume sample mode of the sample 4 processing apparatus according to the third embodiment;
Fig. 16 is a flowchart showing a procedure for the operation of the control device of the sample processing apparatus according to a fourth embodiment;
Fig. 17 is a flowchart showing a procedure for the agitation operation in the sample processing apparatus according to the fourth embodiment;
Fig. 18A is a side view describing an operation of an identification mechanism of when identifying the sample tube for normal samples; and
Fig. 18B is a side view describing an operation of an identification mechanism of when identifying the sample tube for low volume samples.

### DETAILED DESCRIPTION OF PREFERRED EMBODIMENTS

Preferred embodiments of the present invention will be hereinafter described with reference to the drawings.

### [First Embodiment]

### [Configuration of sample processing apparatus]

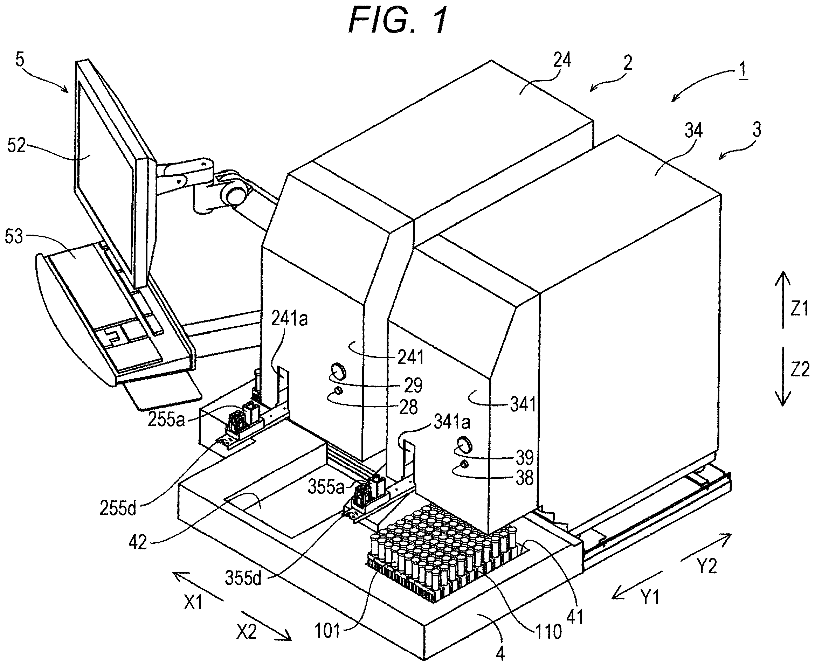

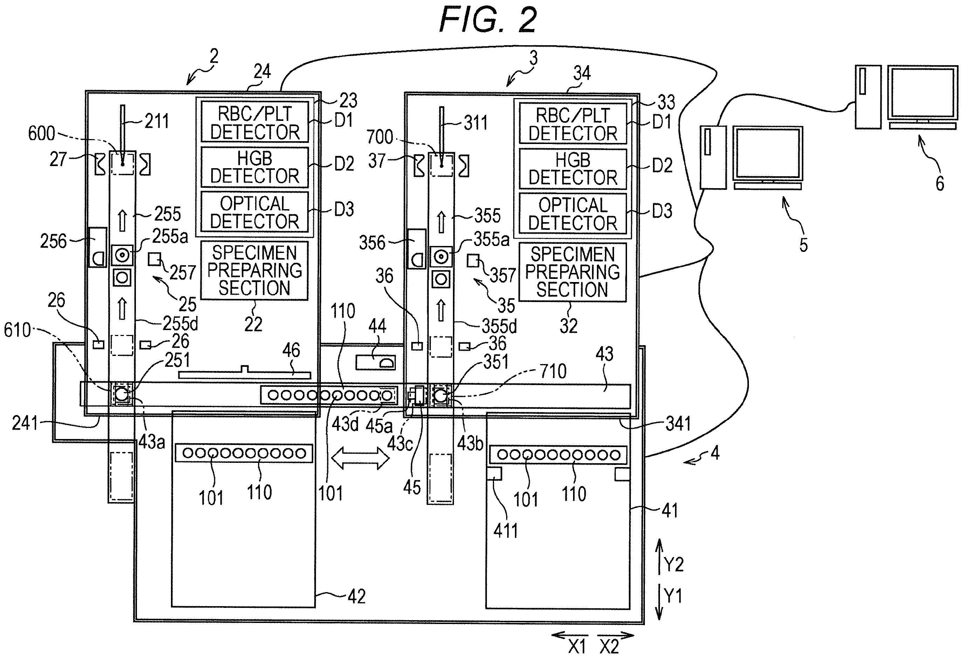

First, a configuration of a sample processing apparatus according to an embodiment will be described. Fig. 1 is a perspective view showing an outer appearance of the sample processing apparatus according to the present embodiment. Fig. 2 is a schematic view showing a configuration of the sample processing apparatus according to the present embodiment. A sample processing apparatus 1 shown in Fig. 1 is an automatic blood cell counter configured for counting blood cells in whole blood sample collected from a subject. The apparatus 1 includes two measurement units, first measurement unit 2 and second measurement unit 3, a sample transporting device (sampler) 4 arranged on a front surface side (side of direction of arrow Y1) of the first measurement unit 2 and the second measurement unit 3, and a control device 5 including a PC (Personal Computer) connected to each of the first measurement unit 2, the second measurement unit 3, and the sample transporting device 4 in a data communicable manner, as shown in the figure. The sample processing apparatus 1 is also connected to a host computer 6 (see Fig. 2) by the control device 5.

As shown in Fig. 1 and Fig. 2, the first measurement unit 2 and the second measurement unit 3 are measurement units of substantially the same type, and are arranged adjacent to each other. Specifically, in the present embodiment, the second measurement unit 3 uses the same measurement principle as the first measurement unit 2 to measure the sample for the same measurement items. The second measurement unit 3 also performs measurement on the measurement items which the first measurement unit 2 does not analyze. Since the first measurement unit 2 and the second measurement unit 3 are provided with same components, only the structure of the first measurement unit 2 will be described as a representative in the following description. Reference numbers in the brackets refers the corresponding components of the second measurement unit 3.

As shown in Fig. 2, the first measurement unit 2 (3) includes an pipette 211 (311) for aspirating blood sample from a sample tube 101, a specimen preparing section 22 (32) for preparing a measurement specimen from the blood sample aspirated by the pipette 211 (311), and a detecting section 23 (33) for detecting blood cells in the measurement specimen prepared by the specimen preparing section 22 (32).

Moreover, the first measurement unit 2 (3) includes a unit cover 24 (34) which is a housing for accommodating components such as the specimen preparing section 22, 32, a sample tube transporting section 25 (35) for retrieving the sample tube 101 to the inside of the unit cover 24 (34) and transporting the sample tube 101 to an aspirating position 600 (700) (see Fig. 2) by the pipette 211 (311), a presence/absence detecting section 26 (36) for detecting the presence/absence of the sample tube 101 transported to the inside by the sample tube transporting section 25 (35) and a chuck section 27 (37) for fixing and holding the sample tube 101 at the aspirating position 600 (700). As shown in Fig. 1, on the outer side surface of a front surface portion 241 (341) of the unit cover 24 (34) is provided with a sample setting portion open/close button 28 (38), a priority sample measurement start button 29 (39) and an opening 241a (341a) through which a moving portion 255d (355d) of the sample tube transporting section 25 (35) passes. The moving portion 255d (355d) will be described later.

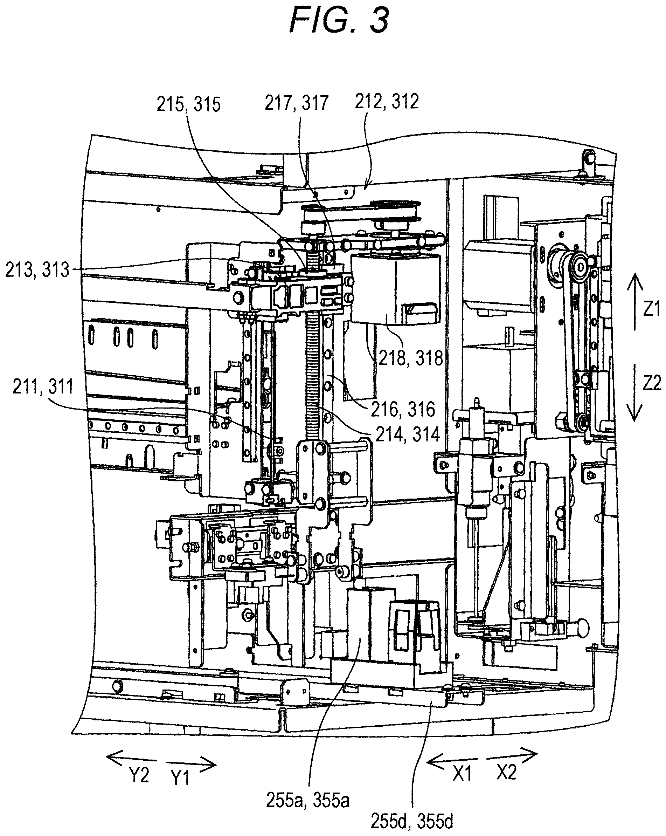

Fig. 3 is a perspective view showing a configuration of the pipette 211 (311) and a peripheral portion thereof. As shown in Fig. 3, the sample processing apparatus 1 includes the pipette 211 (311), and an aspirating tube moving section 212 (312), which is a drive section for moving the pipette 211 (311) through a lid of the sample tube 101 in the up and down direction. The distal end of the pipette 211 (311) has a sharp edge enabled to pierce the lid of the sample tube 101. On an outer peripheral surface of the pipette 211 (311) is formed with a groove that extends in a longitudinal direction of the pipette 211 (311), so that the inside of the sample tube 101 is opened to outside air through the groove when the pipette 211 (311) is passed through the lid of the sample tube 101. The aspirating tube moving section 212 (312) has a function of moving the pipette 211 (311) in the up and down direction (direction of arrows Z1 and Z2). The aspirating tube moving section 212 (312) includes a horizontal arm 213 (313) for fixing and holding the pipette 211 (311), a screw shaft 214 (314) that passes through the horizontal arm 213 (313) in the up and down direction (direction of arrows Z1 and Z2), and a nut 215 (315) that is screw-fitted to the screw shaft 214 (314). Furthermore, the aspirating tube moving section 212 (312) includes a slide rail 216 (316) arranged parallel (direction of arrows Z1 and Z2) to the screw shaft 214 (314), a slidably moving member 217 (317) attached in a slidably moving manner to the slide rail 216 (316), and a stepping motor 218 (318). The horizontal arm 213 (313) is fixed to the nut 215 (315) and the slidably moving member 217 (317).

The detecting section 23 (33) is configured by a RBC/PLT detector D1 used for an RBC measurement (measurement for counting a number of red blood cells) and PLT measurement (measurement for counting a number of blood platelets), an HGB detector D2 used for a HGB measurement (measurement of hemoglobin contents in blood), and an optical detector D3 used for a WBC measurement (measurement for counting a number of white blood cells), a DIFF measurement (measurement for classification of white blood cell subtypes), a NRBC measurement, and an RET measurement. The RBC/PLT detector D1 is configured to perform RBC detection (detection of red blood cells) and PLT detection (detection of blood platelets) through a sheath flow DC detection method. The HGB detector D2 is configured to perform HGB detection (detection of hemoglobin in the blood) through a SLS-hemoglobin method. The optical detector D3 is configured to perform WBC detection (detection of white blood cells) through a flow cytometry method with a semiconductor laser. Specifically, the optical detector D3 detects an intensity of forward scattered light, an intensity of side scattered light, and an intensity of side fluorescence emitted from blood cells in the sheath flow irradiated with light, as characteristic parameters of the blood cells through the flow cytometry method. The detected characteristic parameters of the blood cells are used in the WBC measurement, the DIFF measurement, and the like. The WBC measurement is the measurement that counts the white blood cells and calculates the concentration of the white blood cells in the blood sample. The DIFF measurement is the measurement that classifies the white blood cells into several subtypes, such as lymphocytes, basocytes, eosinocytes, neutrophil cells, monocytes, and the like and calculates the respective concentration in the measurement specimen.

The detection results obtained by the detecting section 23 (33) are transmitted to the control device 5 as measurement data (measurement result) of the sample. The measurement data is low data provided to be a basis of analysis result (number of red blood cells, number of blood platelets, hemoglobin content, number of white blood cells, etc.) to be provided to the user.

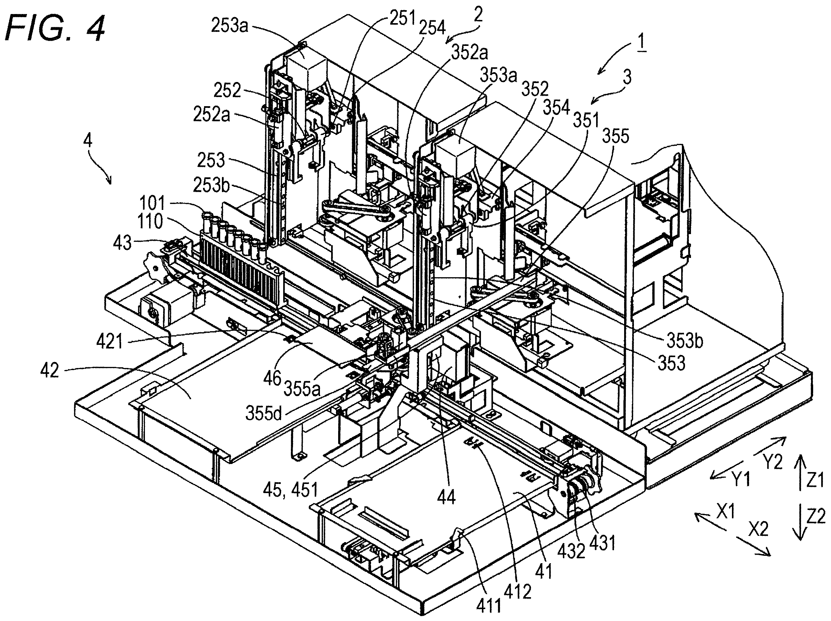

Fig. 4 is a perspective view showing a configuration of the sample tube transporting section. As shown in Fig. 4, the sample tube transporting section 25 (35) (see Fig. 2) includes a hand portion 251 (351) capable of gripping a sample tube 101, an open/close portion 252 (352) for opening/closing the hand portion 251 (351), an up-down driving portion 253 (353) for linearly moving the hand portion 251 (351) in the up and down direction (direction of arrows Z1 and Z2), and an agitating motor portion 254 (354) for moving (swinging) the hand portion 251 (351) like a pendulum between an upright state and an overturned state. The agitating motor portion 254 (354) is configured to swing the hand portion 251 (351) like a pendulum between the upright state and the overturned state by the power of the stepping motor. Furthermore, as shown in Fig. 2, the sample tube transporting section 25 (35) includes a sample tube transfer portion 255 (355) for substantially horizontally moving the sample tube 101 in the direction of the arrows Y1 and Y2, a barcode reading portion 256 (356) and a container detecting portion 257 (357). The container detecting portion 257 (357) is arranged in the vicinity of the barcode reading portion 256 (356) (see Fig. 2).

The hand portion 251 (351) is arranged above a transport path of a rack 110 to be transported by the sample transporting device 4. The hand portion 251 (351) is also configured to be moved downward (direction of arrow Z2) and then opened/closed by the open/close portion 252 (352) to grip the sample tube 101 accommodated in the rack 110 when the sample tube 101 is transported to a first (second) take-out position 43a (43b) (see Fig. 2) by the sample transporting device 4.

The hand portion 251 (351) is also configured to take out the sample tube 101 from the rack 110 by moving the gripped sample tube 101 upward (direction of arrow Z1), and then swing it for several times, e.g. ten times, like a pendulum by the agitating motor portion 254 (354). The hand portion 251 (351) thus can agitate blood in the gripped sample tube 101. After the agitation is finished, the hand portion 251 (351) is moved downward (direction of arrow Z2) and then the gripping of the sample tube 101 is released by the open/close portion 252 (352). Specifically, the hand portion 251 (351) is configured to set the sample tube 101 in a sample setting portion 255a (355a) moved to a sample setting position 610 (710) (see Fig. 2) by the sample tube transfer portion 255 (355). As shown in Fig. 2, when seen in plan view, the first take-out position (sample tube take-out position) 43a and the sample setting position (sample tube setting position) 610 are arranged to overlap. Also, the second take-out position (sample tube take-out position) 43b and the sample setting position (sample tube setting position) 710 are arranged to overlap.

The open/close portion 252 (352) is configured to open/close the hand portion 251 (351) so as to grip the sample tube 101 by the power of an air cylinder 252a (352a).

The up-down driving portion 253 (353) is configured to move the hand portion 251 (351) in the up and down direction (direction of arrows Z1 and Z2) along a rail 253b (353b) by the power of the stepping motor 253a (353a). The chuck section 27 (37) is configured to fix and hold the sample tube 101 transferred to the aspirating position 600 (700).

A pre-analysis rack holding section 41 includes a rack feeding portion 411. The rack feeding portion 411 is configured to move a rack in Y2 direction so that the rack 110 stocked in the pre-analysis rack holding section 41 is pushed out onto a rack transporting section 43 one at a time. The rack feeding portion 411 is configured to be driven by a stepping motor (not shown) arranged beneath the pre-analysis rack holding section 41. The pre-analysis rack holding section 41 includes a regulating portion 412 (see Fig. 4) in the vicinity of the rack transporting section 43, which prevents a rack 110 to be returned back from the rack transporting section 43 to the pre-analysis rack holding section 41.

A post-analysis rack holding section 42 includes a regulating portion 421 (see Fig. 4) in the vicinity of the rack transporting section 43, which prevents a rack 110 to be returned back from the post-analysis rack holding section 42 to the rack transporting section 43.

As shown in Fig. 2, the rack transporting section 43 is configured to transport a rack 110 to transfer the sample tube 101 held in the rack 110 to a first take-out position 43a for providing a sample tube 101 to the first measurement unit 2, and a second take-out position 43b for providing a sample tube 101 to the second measurement unit 3. The rack transporting section 43 is also configured to transport a rack 110 to locate a sample tube 101 at a sample presence/absence checking position 43c corresponding to a presence/absence detection sensor 45 to check the presence/absence of a sample tube 100. The rack transporting section 43 is also configured to transport a rack 110 to locate a sample tube 101 at a reading position 43d corresponding to a barcode reading section 44 to read the barcode of the sample tube 101.

Furthermore, as shown in Fig. 4, the rack transporting section 43 includes two belts, a first belt 431 and a second belt 432, that can move independently from each other.

The presence/absence detection sensor 45 is a mechanical sensor, which includes a touch piece 451 (see Fig. 4), a light emitting element (not shown) for emitting light and a light receiving element (not shown). Light emitted from the light emitting element is normally not reflected by the touch piece 451. When the touch piece 451 comes into contact with an object, as it bends, the light from the light emitting element is reflected or scattered by the touch piece 451. The presence/absence detection sensor 45 is configured to detect the reflected light by the light receiving element. Thus, when the sample tube 101 accommodated in the rack 110 passes beneath the presence/absence detection sensor 45, the touch piece 451 is bent by the sample tube 101 thus enabling the existence of the sample tube 101 to be detected.

A sample tube determination sensor 45a is also arranged in the vicinity of the presence/absence detection sensor 45. The sample tube determination sensor 45a is an optical sensor that includes a light emitting element and a light receiving element. The sample tube determination sensor 45a is configured to determine a type of a sample tube according to whether or not a beam of light from the light emitting element is reflected and in turn received by the light receiving element.

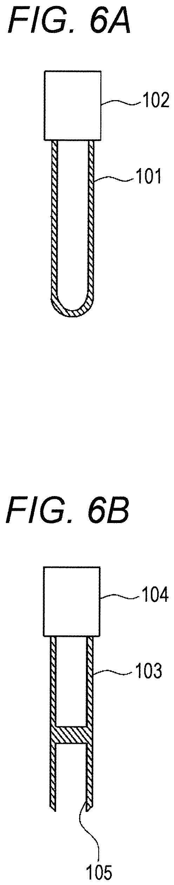

The type of sample tube will now be described. In the present embodiment, a sample tube 101 for normal samples (hereinafter referred as "normal tube 101") and a sample tube 103 for low volume samples (hereinafter referred as "micro tube 103") are used. Fig. 6A is a partial cross-sectional side view showing a configuration of the normal tube 101 for normal samples, and Fig. 6B is a partial cross-sectional side view showing a configuration of the micro tube 103 for low volume samples. The normal tube 101 is used to accommodate a sample collected from a typical subject such as healthy adults, adult patients other than critically-ill patients, and the like. Such normal tube 101 is a cylindrical container having a hemispherical bottom. A lid 102 is attached to the upper end of the tube 101. As shown in Fig. 6A, the peripheral wall of the normal tube 101 has an even thickness entirely, and can accommodate sample in a space from the bottom to the upper end.

The micro tube 103 is used to accommodate a sample collected from patients from which only a low volume of samples can be collected such as infants, toddlers, children, or critically-ill patients. As shown in Fig. 6B, the outer shape of the micro tube 103 has a cylindrical shape. Such micro tube 103 has substantially the same height and outer diameter as the normal tube 101, and a lid 104 is attached to the upper end, similarly to the normal tube 101. Inner bottom of the micro tube 103 is defined at higher level than the lower end of the appearance of the tube 103, that is, the micro tube 103 is formed as raised bottom. Accordingly, capacity of the micro tube 103 is about half or less than that of the normal tube 101. As shown in Fig. 6B, a recess 105 opened toward the lower side is arranged at the bottom of the micro tube 103.

The sample tube determination sensor 45a can distinguish the normal tube 101 and the micro tube 103. Sensor 45a is arranged on transportation path of the rack transporting section 43a (see Fig. 2) between the two belts 431, 432 of the transporting section 43. Sensor 45a includes a light emitting element arranged for emitting light toward upper side and a light receiving element adjacent to the light emitting element. When the sample tube is detected by the presence/absence detection sensor 45, the sample tube determination sensor 45a irradiates a light toward the upper side from the light emitting element. Rack 110 of the present invention is provided with openings corresponding to respective tube holding positions. Therefore, when the light emitting element irradiates a light toward the upper side, light goes through the opening and reaches to the bottom of the tube. If the normal tube 101 exists at the sample presence/absence checking position 43c, the light irradiated from the light emitting element is reflected by the bottom of the normal tube 101. The light receiving element of the sensor 45a receives the reflected light thereby detecting that the sample tube at the sample presence/absence checking position 43c is the normal tube 101. If the micro tube 103 exists at the sample presence/absence checking position 43c, the light irradiated from the light emitting element is not reflected by the bottom of the micro tube 103 since the bottom of the micro tube is provided with a recess 105. The light receiving element thus does not receive the reflected light thereby detecting that the sample tube at the sample presence/absence checking position 43c is the micro tube 103.

A rack feeding section 46 is arranged to face the post-analysis rack holding section 42 with the rack transporting section 43 in between, and is configured to move horizontally in the Y1 direction. Thus, when the rack 110 is transported between the post-analysis rack holding section 42 and the rack feeding section 46, the rack feeding section 46 is moved toward the post-analysis rack holding section 42 thus pushing and moving the rack 110 into the post-analysis rack holding section 42.

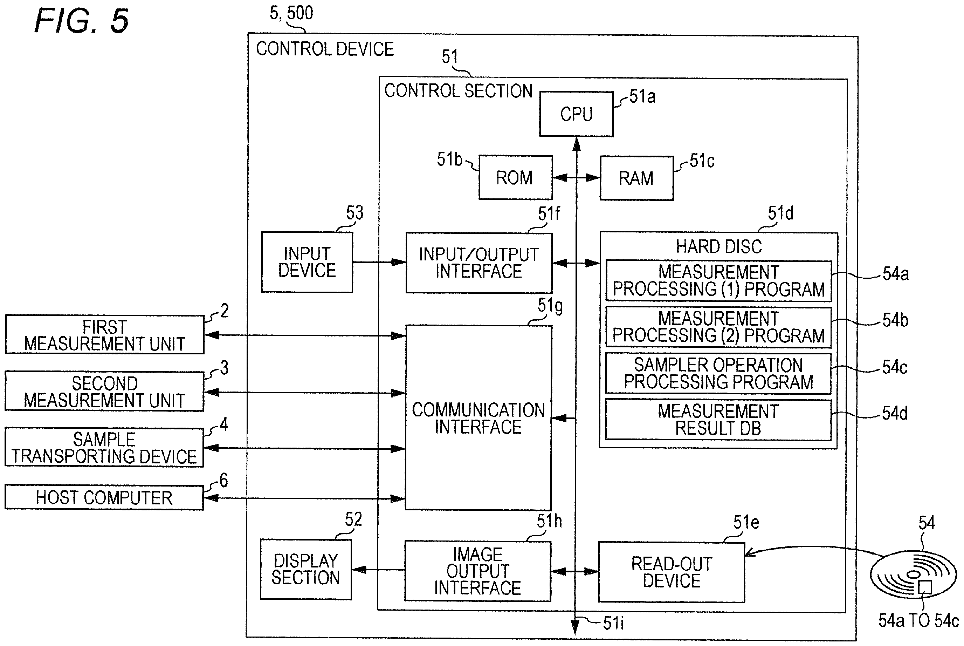

Fig. 5 is a block diagram showing a configuration of the control device 5. As shown in Figs. 1 and 2 and Fig. 5, the control device 5 includes a personal computer, and includes a controller 51 (see Fig. 5) including a CPU, a ROM, a RAM, and the like, a display section 52, and an input device 53. The display section 52 is provided to display a result of analysis etc. obtained by analyzing the data of the digital signals transmitted from the first measurement unit 2 and the second measurement unit 3.

As shown in Fig. 5, the control device 5 is configured by a computer 500, which is mainly configured from the controller 51, the display section 52, and the input device 53. The controller 51 is mainly configured by a CPU 51a, a ROM 51b, a RAM 51c, a hard disc 51d, a read-out device 51e, an input/output interface 51f, a communication interface 51g, and an image output interface 51h. The CPU 51a, the ROM 51b, the RAM 51c, the hard disc 51d, the read-out device 51e, the input/output interface 51f, the communication interface 51g, and the image output interface 51h are connected by a bus 51i.

The CPU 51a is enabled to execute computer programs stored in the ROM 51b and the computer programs loaded in the RAM 51c. The computer 500 functions as the control device 5 when the CPU 51a executes application programs 54a, 54b, and 54c, to be described later.

The ROM 51b is configured by mask ROM, PROM, EPROM, EEPROM, and the like, and is recorded with computer programs to be executed by the CPU 51a, data used for the same, and the like.

The RAM 51c is configured by SRAM, DRAM, and the like. The RAM 51c is used to read out the computer programs recorded on the ROM 51b and the hard disc 51d. In executing the computer programs, the RAM 51c is used as a work region of the CPU 51a.

The hard disc 51d is installed with various computer programs to be executed by the CPU 51a such as operating system and application program, as well as data used in executing the computer program. The measurement processing (1) program 54a for the first measurement unit 2, the measurement processing (2) program 54b for the second measurement unit 3, and the sampler operation processing program 54c for the sample transporting device 4 are also installed in the hard disc 51d. When the application programs 54a to 54c are executed by the CPU 51a, the operations of each section of the first measurement unit 2, the second measurement unit 3, and the sample transporting device 4 are controlled.

The read-out device 51e is configured by flexible disc drive, CD-ROM drive, DVD-ROM drive, and the like, and is able to read out computer programs or data recorded on a portable recording medium 54. The application programs 54a to 54c are stored in the portable recording medium 54, where the computer 500 can read out the application programs 54a to 54c from the portable recording medium 54, and install the application programs 54a to 54c in the hard disc 51d.

The application programs 54a to 54c are not only provided by the portable recording medium 54, but also provided through communication line (wired or wireless) from external devices communicatably connected with the computer 500 through the communication line. For instance, the application programs 54a to 54c may be stored in the hard disc of the server computer on the Internet, so that the computer 500 can access the server computer to download the application programs 54a to 54c and install the application programs 54a to 54c in the hard disc 51d.

Operating system providing graphical interface environment such as Windows™ manufactured and sold by US Microsoft Co. is installed in the hard disc 51d. In the following description, the application programs 54a to 54c are assumed to operate on the operating system.

The input/output interface 51f is configured by serial interface such as USB, IEEE1394, RS-232C; parallel interface such as SCSI, IDE, IEEE1284; analog interface such as D/A converter, A/D converter, and the like. The input device 53 is connected to the input/output interface 51f, so that the user can input data to the computer 500 using the input device 53.

The communication interface 51g is, for example, Ethernet™ interface. The computer 500 transmits and receives data with the first measurement unit 2, the second measurement unit 3, the sample transporting device 4, and the host computer 6 using a predetermined communication protocol by means of the communication interface 51g.

The image output interface 51h is connected to the display section 52 configured by LCD, CRT, or the like, and is configured to output an image signal corresponding to the image data provided from the CPU 51a to the display section 52. The display section 52 displays the image (screen) according to the input image signal.

According to the configuration described above, the controller 51 is configured to analyze components to be analyzed using the measurement results transmitted from the first measurement unit 2 and the second measurement unit 3, and acquire an analysis results (number of red blood cells, number of blood platelets, hemoglobin content, number of white blood cells, etc.).

### [Operation of sample processing apparatus]

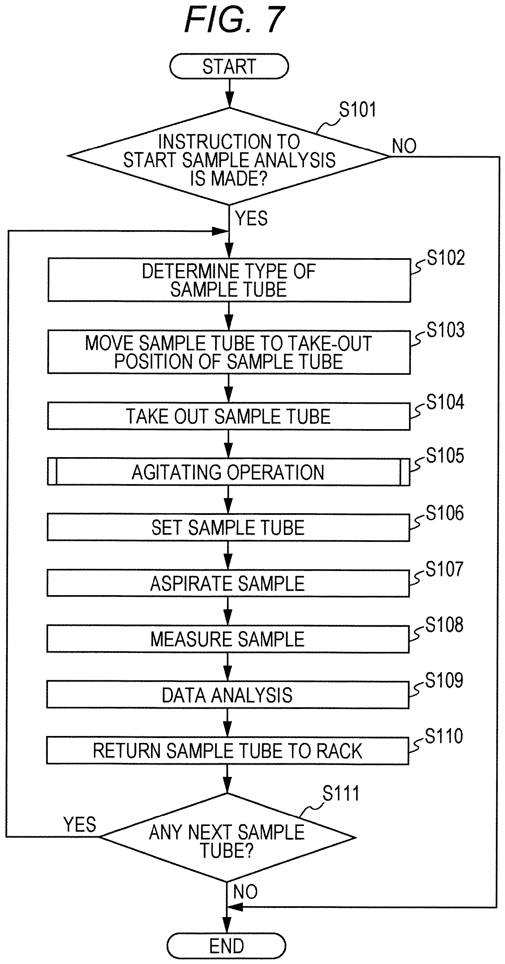

The operation of the sample processing apparatus according to the present embodiment will now be described. Fig. 7 is a flowchart showing a procedure for the operation of the control device of the sample processing apparatus according to the present embodiment. The first measurement unit 2 and the second measurement unit 3 perform the analyzing operation including agitation and aspiration of a sample through operations similar to each other, and thus the operation by the first measurement unit 2 will be described below and the description on the operation by the second measurement unit 3 will be omitted.

First, a rack 110 holding at least one of the normal tube 101 sealed with lid or the micro tube 103 sealed with lid, which contains therein a blood sample to be analyzed, is set on the sample transporting device 4 by the user. When determining that instruction to start analysis is made by pushing of a start button in step S101 (Yes in step S101), the CPU 51a of the control device 5 operates the sample transporting device 4 to transport the rack 110. The CPU 51a determines, based on the output signals of the presence/absence detection sensor 45 and the sample tube determination sensor 45a, whether the tube existing at the sample presence/absence checking position 43c is the normal tube 101 or the micro tube 103 (step S102). After the type of the sample tube is determined, the CPU 51a controls the transportation of the rack 110 by the sample transporting device 4, and positions the detected sample tube at the first take-out position (sample tube take-out position) 43a (step S103).

The CPU 51a then takes out the sample tube 101 from the rack 110 using the hand portion 251 (step S104). Specifically, the CPU 51a drives the up-down driving portion 253, so that the hand portion 251 is lowered in an opened state and stopped at the sample tube holding position to hold the sample tube 101 or 103.

The CPU 51a then drives the open/close portion 252, so that the hand portion 251 is closed and the sample tube 101 or 103 is gripped. The CPU 51a again drives the up-down driving portion 253, so that the hand portion 251 rises while holding the sample tube 101 or 103. Thus, the sample tube 101 or 103 is taken out from the rack 110. The hand portion is stopped at a predetermined height. In this state, the sample tube 101 or 103 is in an upright state in which an axis in the longitudinal direction thereof lies substantially along the vertical direction.

The CPU 51a then drives the agitating motor portion 254 to perform the agitation operation of the sample contained in the sample tube 101 or 103 (step S105).

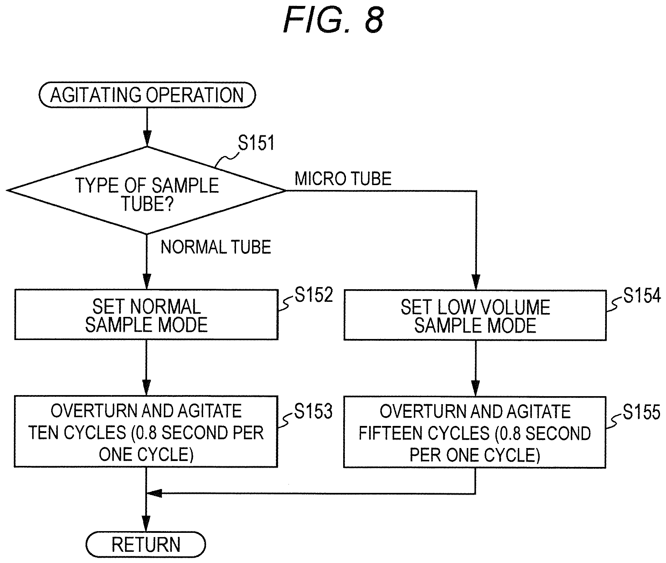

The agitation operation will be described in detail below. Fig. 8 is a flowchart showing a procedure for the agitation operation in the sample processing apparatus according to the present embodiment. In the agitation operation, the CPU 51a first determines whether the type of the sample tube detected in step S102 is the normal tube 101 or the micro tube 103 (step S151).

If the type of the sample tube is the normal tube 101 in step S151 ("for normal sample" in step S151), the CPU 51a sets a normal sample mode (step S152). In the present embodiment, a data storing region for storing information which indicates operation mode set by the CPU 51a is defined in the RAM 51c or the hard disc 51d. The setting of the normal sample mode is carried out by storing information indicating the normal sample mode in the region. After the setting of the normal sample mode is performed in such manner, the CPU 51a causes the hand portion 251 holding the sample tube 101 to perform the forward/reverse rotation movement thus agitating the blood sample contained in the normal tube 101 (step S153).

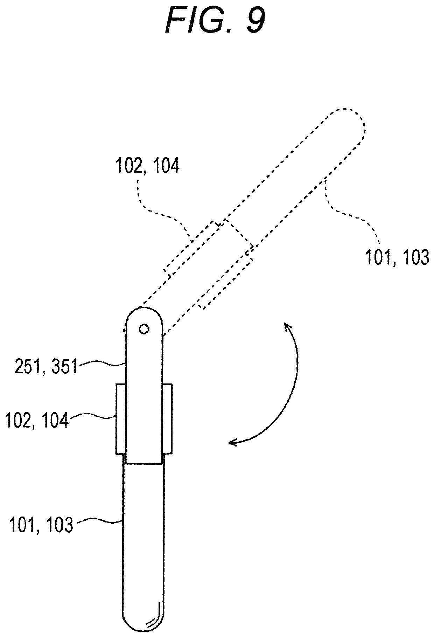

Fig. 9 is a schematic view showing overturning and agitation of the sample. As shown in Fig. 9, the sample processing apparatus 1 performs the operation of rotating the hand portion 251 by the operation of the agitating motor portion 254. Changing the orientation of the sample tube from the upright state (shown with solid line) to the overturned state (shown with broken line) and changing the orientation from the overturned state to the upright state is repeatedly carried out to agitate the sample contained in the sample tube. The "overturned state" means the state in which the bottom of the sample tube is raised to a level higher than the lid. That is, the rotation angle Θ of when changing the orientation of the sample tube from the upright state to the overturned state is 90°<Θ≦180°.

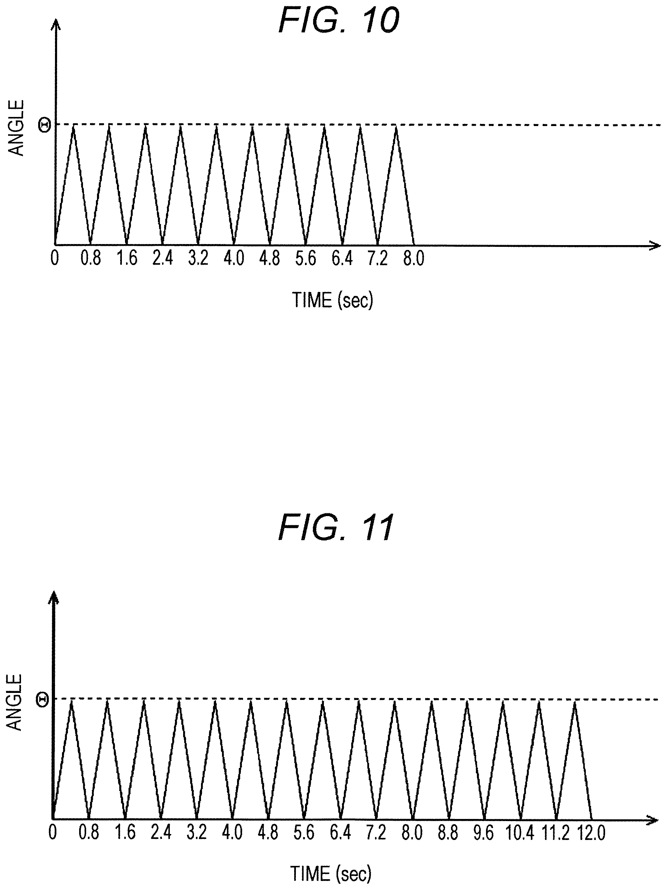

Fig. 10 is a graph describing the sample agitation in the normal sample mode. In Fig. 10, the vertical axis indicates the rotation angle of the hand portion 251, and the horizontal axis indicates the time lapse. In step S153, the CPU 51a actuates the hand portion 251 to change the orientation of the normal tube 101 from the upright state to the overturned state at 0.4 second. Accordingly the hand portion 251 rotates at 0.4 second in the counterclockwise direction in Fig. 9. The CPU 51a then actuates the hand portion 251 to change the orientation of the normal tube 101 from the overturned state to the upright state at 0.4 second. Accordingly the hand portion 251 rotates at 0.4 second in the clockwise direction in Fig. 9. In other words, in step S153, the time required for one cycle including changing the orientation of the sample tube from the upright state to the overturned state and then back to the upright state is 0.8 second. The overturning and agitation of the sample is executed for ten cycles in step S153. That is, the time required for the agitation of the sample in step S153 is 8.0 seconds. After the processing of step S153 is completed, the CPU 51a returns the processing to the calling address of step S105 in the main routine.

If the type of sample tube is the micro tube 103 in step S151 ("for low volume sample" in step S151), the CPU 51a stores information indicating the low volume sample mode in the date storing region in the RAM 51c or the hard disc 51d, thereby setting the low volume sample mode (step S154). The CPU 51a actuates the hand portion 251 holding the micro tube 103 to perform the forward/reverse rotation movement thus agitating the blood sample contained in the micro tube 103 (step S155).

Fig. 11 is a graph describing the sample agitation in the low volume sample mode of the sample processing apparatus according to the present embodiment. In Fig. 11, the vertical axis indicates the rotation angle of the hand portion 251, and the horizontal axis indicates the time. In step S155, the CPU 51a actuates the hand portion 251 to change the orientation of the micro tube 103 from the upright state to the overturned state at 0.4 second. The hand portion 251 rotates at 0.4 second in the counterclockwise direction in Fig. 9. The CPU 51a then actuates the hand portion 251 to change the orientation of the micro tube 103 from the overturned state to the upright state at 0.4 second. The hand portion 251 rotates at 0.4 second in the clockwise direction in Fig. 9, similarly to the normal sample mode. In other words, in step S155, the time required for one cycle of changing the orientation of the sample tube from the upright state to the overturned state and then back to the upright state is 0.8 second, similar to the normal sample mode. Different from the case of the normal sample mode, however, the overturning and agitation of the sample is executed for fifteen cycles in step S155. That is, the time required for the agitation of the sample in step S155 is twelve seconds. Thus, even if the low volume sample is difficult to be sufficiently agitated by an agitation manner adjusted for a normal sample, it can be sufficiently agitated by long time of rotation. And agitation failure in the low volume sample can be suppressed. After the processing of step S155 is completed, the CPU 51a returns the processing to the calling address of step S105 in the main routine.

During the agitation operation, the rack 110 is evacuated from the sample tube take-out position 43a, and then the sample setting portion 255a is moved forward to a predetermined position beneath the raised hand portion 251 by the drive of the sample tube transfer section 255.

After the agitation is finished, the CPU 51a lowers the hand portion 251 to set the sample tube held by the hand portion 251 in the sample setting portion 255a and opens the hand portion 251 to release the sample tube (step S106).

The hand portion 251 is then raised, the sample setting portion 255a is taken into the interior of the first measurement unit 2 by the drive of the sample tube transfer section 255 and stopped immediately next to the barcode reading portion 256.

The CPU 51a then performs the barcode reading of the sample tube 101 and aspirating operation of the sample from the sample tube 101 or 103 (step S107). Specifically, after reading of a barcode attached to the sample tube 101 or 103 and the detection of the presence/absence of the sample tube are carried by the barcode reading portion 256 according to the control of the CPU 51a, the sample setting portion 255a is positioned at the aspirating position 600. The pipette 211 is driven and lowered from the upper side by the aspirating tube drive section 212 while chucking the sample tube 101 or 103 by the chuck section 27 so that the pipette 211 passes through a sealed lid 102 of the sample tube 101 or 103. The pipette 211 is stopped at a predetermined position.

After the pipette 211 is stopped at the predetermined position in the sample tube 101 or 103, a predetermined amount of blood sample is aspirated by the pipette 211 (step S107).

The sample ID is acquired from the read barcode, and an inquiry of the measurement order of the sample is made to the host computer 6 (see Fig. 2) with the relevant sample ID as a search key.

The CPU 51a then controls the first measurement unit 2 to perform a preparation and a measurement of the RBC/PLT measurement specimen, a HGB measurement specimen, and/or the WBC measurement specimen based on the acquired measurement order (step S108). Specifically, a part of the blood sample from the aspirating tube and a predetermined amount of diluted solution are mixed to prepare a diluted measurement specimen. A part (RBC/PLT measurement specimen) of the prepared measurement specimen is introduced to the RBC/PLT detector D1 (electrical resistance type detector), and detection of particles and data collection are carried out for a predetermined time. The remaining measurement specimen is introduced to the HGB detector D2 and mixed with a predetermined amount of hemolytic agent to prepare the diluted HGB measurement specimen. The hemoglobin concentration is measured in the HGB measurement specimen. Furthermore, a part of the blood sample from the pipette and a predetermined amount of hemolytic agent and a predetermined amount of stain fluid are mixed to prepare the diluted WBC measurement specimen. The prepared WBC measurement specimen is supplied to the WBC detector D3, and the characteristic parameters of the measurement specimen are acquired by the WBC detector D3. In the processing of step S108, the measurement conditions (usage amount of sample, usage amount of reagent, measurement time, etc.) differ between when the normal sample mode is set and when the low volume sample mode is set.

After the sample measurement is finished, the CPU 51a executes the analysis of the measurement data obtained thereby (step S109), and displays the analysis result on the display section 52 using tables, distribution maps, and the like.

The CPU 51a also performs the operation for returning the sample tube 101 or 103 to the original rack 110 (step S110). Specifically, the sample setting portion 255a is again moved forward by the drive of the sample tube transfer section 255 and stopped at the sample tube setting position 610 according to the control of the CPU 51a.

The hand portion 251 is then lowered from the upper side and stopped at the sample tube holding position.

The hand portion 251 is then closed to hold the sample tube 101 or 103 of the sample setting portion 255a, and thereafter, the hand portion 251 is raised and stopped at a predetermined height.

The sample setting portion 255a is taken into the apparatus by the drive of the sample tube transfer section 255 while the hand portion 251 holding the sample tube 101 or 103 is being raised. The rack 110 that was moved away is returned to the first take-out position 43a.

The hand portion 251 is then lowered to insert the sample tube 101 or 103 into the rack 110, and thereafter, the open/close portion 252 is opened, so that the sample tube 101 or 103 is set in the rack 110.

The hand portion 251 is then raised. Thereafter, the CPU 51a determines whether or not a sample tube containing the blood sample to be analyzed next is present (step S111), and proceeds to step S102 to move the rack 110 and determine the type of sample tube containing the blood sample to be analyzed next if the next sample tube is present (YES in step S111). Similarly hereinafter, a series of operations described above after step S103 are repeatedly carried out. If determined that the sample tube containing the blood sample to be analyzed next is not present in step S111 (NO in step S111), the CPU 51a terminates the processing.

### (Second Embodiment)

### [Configuration of sample processing apparatus]

The configuration of the sample processing apparatus according to the present embodiment is similar to the configuration of the sample processing apparatus according to the first embodiment, and thus same reference numerals are denoted on the same configuring elements and the description thereof is omitted.

### [Operation of sample processing apparatus]

The operation of the sample processing apparatus according to the present embodiment will now be described. The operation of the sample processing apparatus according to the present embodiment is similar to the operation of the sample processing apparatus according to the first embodiment except for the agitation operation, and thus the agitation operation will be described here and the description on other operations will be omitted.

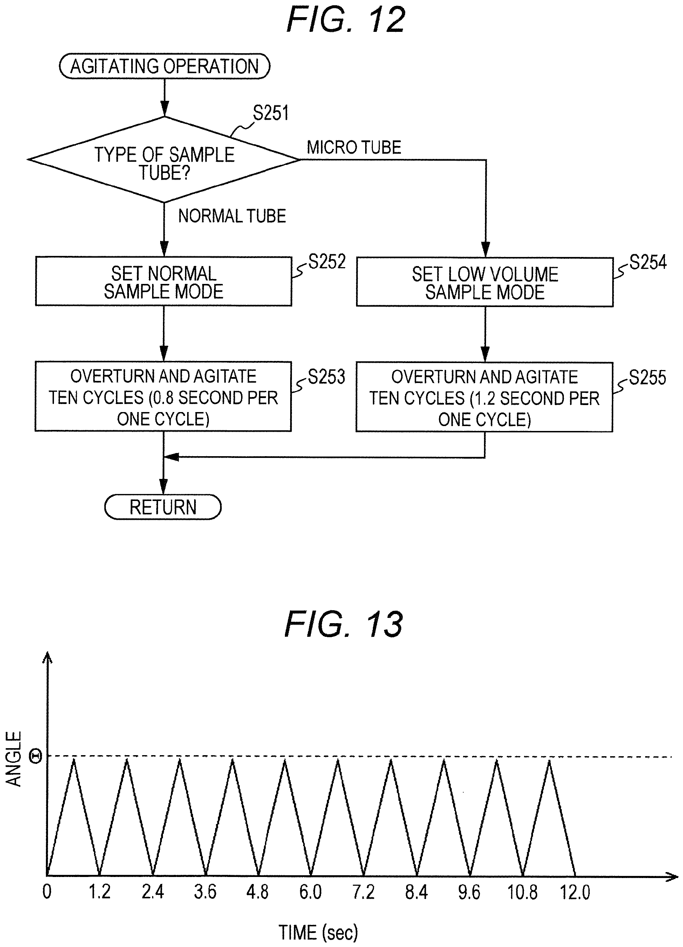

Fig. 12 is a flowchart showing a procedure for the agitation operation in the sample processing apparatus according to the present embodiment. The processing of steps S251 to S254 are similar to the processing of steps S151 to S154 described in the first embodiment, and thus the description thereof will be omitted.

If the low volume sample mode is set, the CPU 51a causes the hand portion 251 holding the micro tube 103 to perform the forward/reverse rotation movement through an operation different from the normal sample mode to agitate the blood sample contained in the sample tube 103 (step S255).

Fig. 13 is a graph describing the sample agitation in the low volume sample mode of the blood processing apparatus according to the present embodiment. In Fig. 13, the vertical axis indicates the rotation angle of the hand portion 251, and the horizontal axis indicates the time lapse. In step S255, the CPU 51a actuates the hand portion 251 to change the orientation of the micro tube 103 from the upright state to the overturned state at 0.6 second, different from the normal sample mode. The hand portion 251 rotates at 0.6 second in the counterclockwise direction in Fig. 9. The CPU 51a then actuates the hand portion 251 to change the orientation of the micro tube 103 from the overturned state to the upright state at 0.6 second, different from the normal sample mode. The hand portion 251 rotates at 0.6 second in the clockwise direction in Fig. 9. In other words, in step S255, the time required for one cycle of changing the orientation of the micro tube 103 from the upright state to the overturned state, and then back to the upright state is 1.2 seconds. The overturning and agitation of the sample are executed for ten cycles. That is, the time required for the agitation of the sample in step S255 is twelve seconds. Thus, even if the low volume sample is difficult to be sufficiently agitated by an agitation manner adjusted for a normal sample, it can be sufficiently agitated by long time of rotation. And agitation failure in the low volume sample can be suppressed.

In the low volume sample mode, the orientation of the micro tube 103 slowly changes from the upright state to the overturned state compared to the normal sample mode. Thus, the blood cells accumulated at the bottom of the micro tube 103 in the upright state surely flows toward the upper side (i.e., vicinity of the lid 104) of the micro tube 103 in the process of lifting it to the overturned state. Similarly, in the low volume sample mode, the orientation of the micro tube 103 slowly changes from the overturned state to the upright state compared to the normal sample mode, and thus the blood cells moved to the upper side of the micro tube 103 surely flows toward the bottom side of the micro tube 103 in the process of shifting it to the upright state. Therefore, blood cells in the sample is sufficiently dispersed and mixed well, the low volume sample is sufficiently agitated, and the agitation failure is suppressed.

### (Third Embodiment)

### [Configuration of sample processing apparatus]

The configuration of the sample processing apparatus according to the present embodiment is similar to the configuration of the sample processing apparatus according to the first embodiment, and thus same reference numerals are denoted on the same configuring elements and the description thereof is omitted.

### [Operation of sample processing apparatus]

The operation of the sample processing apparatus according to the present embodiment will now be described. The operation of the sample processing apparatus according to the present embodiment is similar to the operation of the sample processing apparatus according to the first embodiment except for the agitation operation, and thus the agitation operation will be described here and the description on other operations will be omitted.

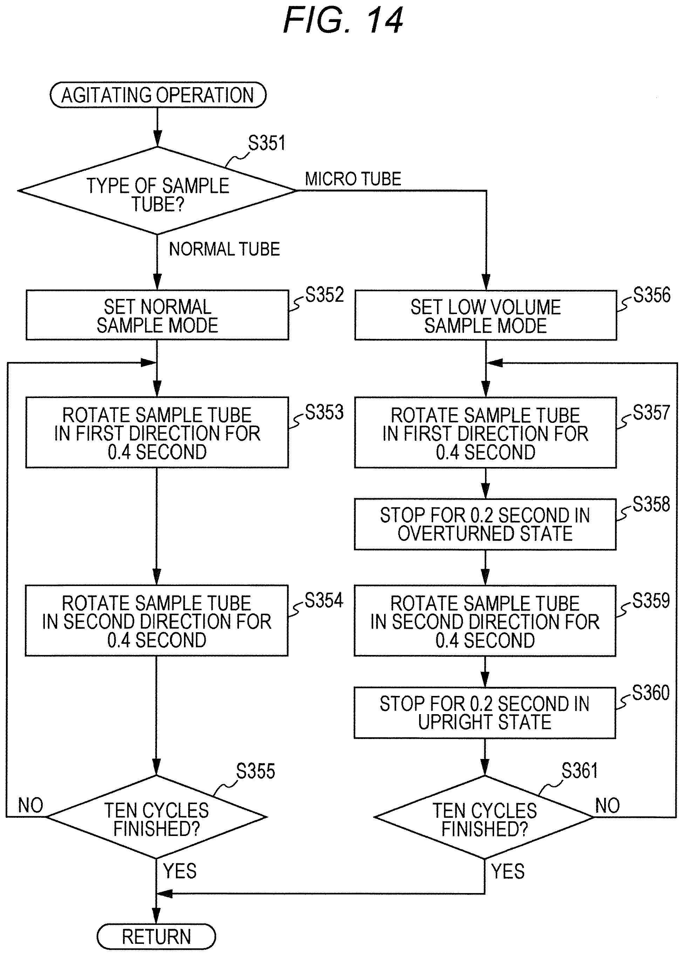

Fig. 14 is a flowchart showing a procedure for the agitation operation in the sample processing apparatus according to the present embodiment. In the agitation operation, the CPU 51a first determines whether the type of sample tube detected in step S102 is the normal tube 101 or the micro tube 103 (step S351).

If the type of sample tube is the normal tube in step S351 ("for normal sample" in step S351), the CPU 51a sets the normal sample mode (step S352). After the setting of the normal sample mode is performed, the CPU 51a causes the hand portion 251 holding the normal tube 101 to perform the forward/reverse rotation movement thus agitating the blood sample contained in the micro tube 103 (steps S353, S354, S355).

The CPU 51a actuates the hand portion 251 to rotate the normal tube 101 at 0.4 second in the counterclockwise direction (first direction) in Fig. 9 in step S353 and then to rotate the normal tube 101 at 0.4 second in the clockwise direction (second direction) in Fig. 9 in step S354. The CPU 51a determines whether or not the overturning and agitation of the sample are performed for ten cycles (step S355), and returns the processing to step S353 if not performed for ten cycles (NO in step S355). The overturning and agitation of the sample are thereby executed for ten cycles. This is similar to the agitation operation of the sample in the normal sample mode in the first embodiment.

When ten cycles of the overturning and agitation of the sample has been completed in step S355 (Yes in step S355), the CPU 51a returns the processing to the calling address of step S105 in the main routine.

If the type of the sample tube is the micro tube 103 in step S351 ("for low volume sample" in step S351), the CPU 51a sets the low volume sample mode (step S356). The CPU 51a further causes the hand portion 251 holding the micro tube 103 to perform the forward/reverse rotation movement thus agitating the blood sample contained in the micro tube 103 (steps S357 to S361).

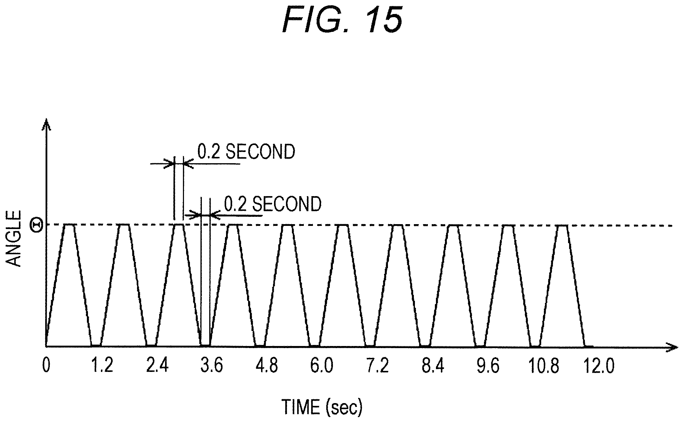

Fig. 15 is a graph describing the sample agitation in the low volume sample mode of the sample processing apparatus according to the present embodiment. In Fig. 15, the vertical axis indicates the rotation angle of the hand portion 251, and the horizontal axis indicates the time lapse. The CPU 51a actuates the hand portion to rotate the micro tube 103 at 0.4 second in the first direction to change the orientation of it to the overturned state in step S357 and then to stop the same for 0.2 second in the overturned state in step S358. Thereafter, the CPU 51a actuates the hand portion 251 to rotate the micro tube 103 at 0.4 second in the second direction to change the orientation of it to the upright state in step S359 and then to stop the same for 0.2 second in the upright state in step S360. The CPU 51a determines whether or not the overturning and agitation of the sample has been performed for ten cycles (step S361), and returns the processing to step S357 if not performed for ten cycles (NO in step S361). The overturning and agitation of the sample are thereby executed for ten cycles.

When ten cycles of the overturning and agitation of the sample has been completed in step S361 (Yes in step S361), the CPU 51a returns the processing to the calling address of step S105 in the main routine.

In the sample processing apparatus according to the present embodiment, the time required for the agitation of the sample in the low volume sample mode is twelve seconds. Thus, even if the low volume sample is difficult to be sufficiently agitated by an agitation manner adjusted for a normal sample, it can be sufficiently agitated by long time of rotation. And agitation failure in the low volume sample can be suppressed.

In the low volume sample mode, the sample tube 103 is stopped for 0.2 second in the overturned state. Thus, blood cells accumulated at the bottom of the micro tube 103 in the upright state surely flows toward the upper side of the micro tube 103 while stopped in the overturned state. Furthermore, in the low volume sample mode, the micro tube 103 is stopped for 0.2 second in the upright state, and thus the blood cells moved to the upper side of the micro tube 103 surely flows toward the bottom side of the micro tube 103 while stopped in the upright state. Therefore, the low volume sample is sufficiently agitated, and the agitation failure is suppressed.

### (Fourth Embodiment)

### [Configuration of sample processing apparatus]

The configuration of the sample processing apparatus according to the present embodiment is similar to the configuration of the sample processing apparatus according to the first embodiment, and thus same reference numerals are denoted on the same configuring elements and the description thereof is omitted.

### [Operation of sample processing apparatus]

The operation of the sample processing apparatus according to the present embodiment will now be described. In the sample processing apparatus according to the present embodiment, the user can operate the control device 5 to set the operation mode of the sample processing apparatus to either the normal sample mode or the low volume sample mode.

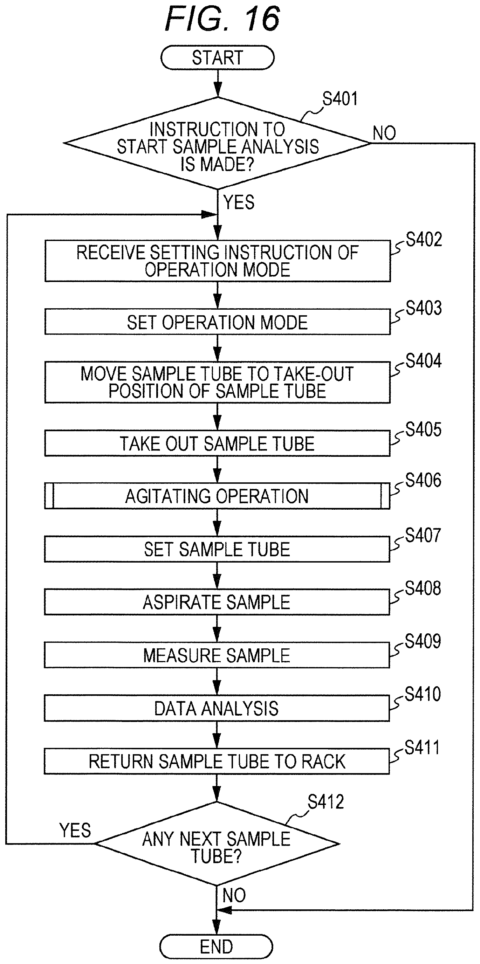

Fig. 16 is a flowchart showing a procedure for the operation of the control device of the sample processing apparatus according to the present embodiment. The first measurement unit 2 and the second measurement unit 3 perform the analyzing operation including agitation and aspiration of the sample through operations similar to each other, and thus the operation by the first measurement unit 2 will be described below and the description on the operation by the second measurement unit 3 will be omitted.

First, a rack 110 holding the normal tube 101 sealed with lid or the micro tube 103 sealed with lid, which contains therein the blood sample to be analyzed, is set on the sample transporting device 4 by the user. When determining that the instruction to start the analysis is made by pushing of a start button in step S401 (Yes in step S401), the CPU 51a of the control device 5 operates the sample transporting device 4 to transport the rack 110.

The CPU 51a then receives a setting instruction of the operation mode from the user (step S402). The user can input the setting instruction of the normal sample mode or the low volume sample mode by operating the input device 53. If the rack 110 accommodating the normal tube 101 is being transported by the sample transporting device 4, the user inputs the setting instruction of the normal sample mode. If the rack 110 accommodating the micro tube 103 is being transported by the sample transporting device 4, the user inputs the setting instruction of the low volume sample mode.

When receiving the setting instruction of the operation mode from the user, the CPU 51a sets the designated operation mode (step S403). That is, CPU 51a sets the normal sample mode if the normal sample mode is designated in step S402 and sets the low volume sample mode if the low volume sample mode is designated.

The processing of steps S404 to S412 are similar to the processing of steps S103 to S111 described in the first embodiment except for the agitation operation (step S406), and thus the description thereof will be omitted.

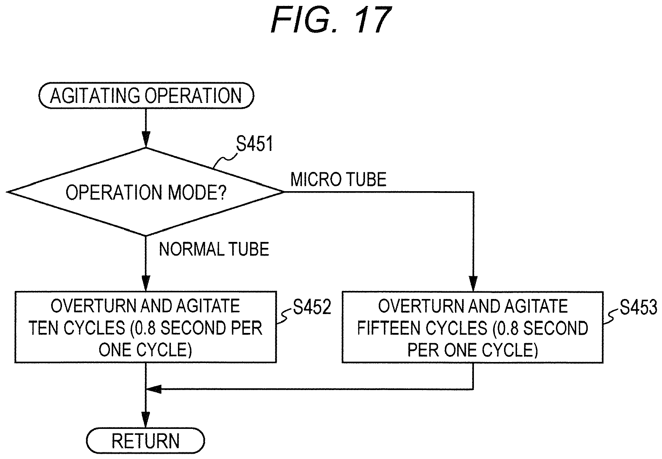

The agitation operation according to the present embodiment will be described in detail below. Fig. 17 is a flowchart showing a procedure for the agitation operation in the sample processing apparatus according to the present embodiment. In the agitation operation, the CPU 51a first determines whether the set operation mode is the normal sample mode or the low volume sample mode (step S451).

If the normal sample mode is set in step S451 ("normal sample mode" in step S451), the CPU 51a causes the hand portion 251 holding the normal tube 101 to perform the forward/reverse rotation movement to agitate the blood sample contained in the normal tube 101 (step S452). The operation of step S452 is similar to the operation of step S153 described in the first embodiment, and thus the description thereof will be omitted.

If the low volume sample mode is set in step S451 ("low volume sample mode" in step S451), the CPU 51a causes the hand portion 251 holding the micro tube 103 to perform the forward/reverse rotation movement to agitate the blood sample contained in the micro tube 103 (step S453). The operation of step S453 is similar to the operation of step S155 described in the first embodiment, and thus the description thereof will be omitted.

### (Other Embodiments)

In the first to fourth embodiments described above, the hand portion 251 moves the sample tube 101, 103 to draw an arcuate so that the orientation of the sample tube 101, 103 is changed from the upright state to the overturned state and from the overturned state to the upright state, but the scope of the present invention is not limited thereto. A configuration changing only the orientation of tube without changing the position of it may be adopted. For example, a configuration of moving the tube to draw a curve or a straight line to change the orientation from the upright state to the overturned state and from the overturned state to the upright state may be adopted.

Further, although the hand portion 251 grips the upper end of the sample tube and swing the sample tube around the gripped portion in the above described embodiments, the scope of the present invention is not limited thereto. As an alternative configuration, a mechanism enabled to grip a sample tube in a middle portion in longitudinal direction of the tube and to rotate the tube around the gripped portion may be adopted as described in US6,818,182. In this configuration, the sample tube may be rotated continuously in one direction, or may be rotated alternatively in one direction and opposite direction.

In the first to third embodiments described above, determination of type of sample tube is made according to difference of the shape of the sample tube, but scope of the present invention is not limited thereto. For example, a barcode indicating the type of sample tube printed on the barcode label may be attached to the sample tube. To specify a type of sample tube, the barcode reader 44 may be configured to read the barcode and the controller may be configured to determine the type of the sample tube according to the information read from the barcode. As an alternative configuration, a configuration of imaging the sample tube with a camera may be adopted. To specify a type of sample tube, the camera may be configured to image the sample tube and the controller may be configured to process the image and determine the type of the sample tube according to the process result. Furthermore, a barcode indicating a type of sample tube held by a rack may be printed on a barcode label and it may be attached to the rack. To specify a type of sample tube, the barcode reader 44 may be configured to read the barcode from the rack and the controller may be configured to determine the type of the sample tube according to the information read from the barcode.

In above described embodiments, although only sample ID is stored in the barcode, information indicating a type of sample tube may be included in barcode together with sample ID. By reading the barcode with the barcode reader 44, the CPU 51a can determine the sample ID as well as the type of the sample tube.

Further, information indicating the type of sample tube may be added or associated to the measurement order registered in association with the sample ID. The barcode reader 44 reads barcode of a sample tube on a rack 110 and sends sample ID to the CPU51a. CPU 51a outputs the sample ID to the host computer to inquire the measurement order. In response to receive the inquiry from the CPU 51a, the host computer searches a measurement order by the sample ID as a query. If a measurement order corresponding to the sample ID is found, the host computer sends the measurement order and the information of the type of sample tube associated with the measurement order to the CPU 51a. According to this configuration, CPU 51a can obtain measurement order and information of type of sample tube simultaneously.

The frequency of measurement of micro tube is lower than that of normal tube. Therefore, it is preferable that CPU 51a determines type of sample tube as micro tube only when a measurement order is added with information specifying as micro tube, and otherwise the CPU 51a determines it is normal tube. According to this configuration, it is convenient to saving effort to input information of type of sample tube for all tubes.

As an alternative configuration, the controller can be configured to determine a type of sample tube referring to the position where the sample tube is held in the rack. CPU 51a may be configured to receive a designation of type of sample tube for respective holding positions of a rack. When a sample tube is positioned at the take-out position, CPU51a determines the type of the sample tube on the basis of its position in the rack and the received designation associated with the position.

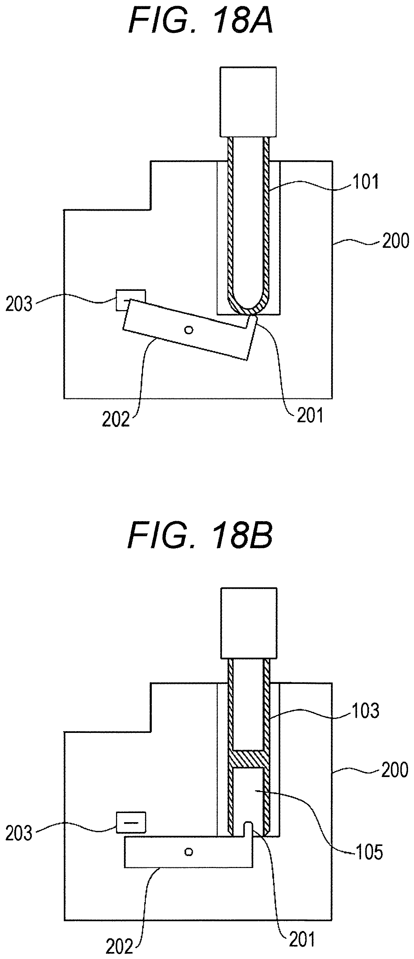

The type of sample tube may be determined by mechanically sensing the difference in structure or shape of the sample tube. Fig. 18A and Fig. 18B show an example of an identification mechanism for mechanically identifying the type of sample tube. Fig. 18A is a side view describing the operation of the identification mechanism of when identifying the normal tube, and Fig. 18B is a side view describing the operation of the identification mechanism for identifying the micro tube. An identification mechanism 200 includes an arm 202 with a projection 201, and a proximity sensor 203 such as a magnetic sensor or an optical sensor arranged in the vicinity of the arm 202. The arm 202 is swingable. If the normal tube 101 is set in the identification mechanism 200, the projection 201 is pushed against the bottom of the normal tube 101 thus swinging the arm 202, as shown in Fig. 18A. In this case, a part of the arm 202 is positioned in the vicinity of the proximity sensor 203 so as to be detected by the proximity sensor 203. The sample tube is thus identified as the normal tube 101. If the micro tube 103 is set in the identification mechanism 200, the projection 201 is inserted to the recess 105 provided at the bottom of the micro tube 103, and thus the arm 202 is not swung, as shown in Fig. 18B. In this case, the arm 202 is not positioned in the vicinity of the proximity sensor 203, and the proximity sensor 203 does not detect the arm 202. The sample tube is thus identified as the micro tube 103. The operation mode can be set to the normal sample mode or the low volume sample mode according to the identification result of the identification mechanism.

In the first to fourth embodiments described above, the configuration of taking out the sample tube 101, 103 from the rack with the hand portion 251 and rotating the hand portion 251 to perform the overturning and agitation of the sample has been described, but the scope of the present invention is not limited thereto.

For example, a mechanism for rotating a rack until the bottom of the sample tube is positioned higher than the lid, and further rotating the rack in the opposite direction until positioned in the upright state to collectively perform overturning and agitation on a plurality of sample tubes held in the rack may be adopted, like as the specimen mixing device described in US7,028,831.

If the mechanism of US7,028,831 is employed to work the present invention, since differentiation of agitation condition for respective sample tubes on one rack is impossible, selection of operation mode will be matter. As a reasonable way to select the operation mode, if at least one of sample tubes held in the rack is the micro tube 103, the low volume sample mode may be applied to the rack, and otherwise the normal sample mode may be applied. According to this configuration, although not only a low volume sample but also a normal sample may be agitated under low volume sample mode, since it is hard to cause an agitation failure even if the normal sample is agitated over a longer time or slowly than usual, there is no problem.

In the first to fourth embodiments described above, the sample processing apparatus 1 includes the first measurement unit 2 and the second measurement unit 3, but configuration of units is not limited thereto. The sample processing apparatus may be configured by one measurement unit and one control device 5. The measurement unit and the control device may not be separately arranged, and the sample processing apparatus in which the function corresponding to the measurement unit and the function corresponding to the control device are provided to one housing may be adopted.

In the embodiments described above, the configuration in which the controller such as the CPU is not arranged in the first measurement unit 2 and the second measurement unit 3, and the operation control of the first measurement unit 2 and the second measurement unit 3 is carried out by the CPU 51a of the control device 5 has been described, but is not limited thereto. A controller including a CPU, a memory, and the like may be arranged in the measurement unit, and the operation control of the measurement mechanism may be carried out by the controller.

In the first to fourth embodiments described above, the sample processing apparatus 1 is a multiple-item blood cell analyzer, but the scope of the present invention is not limited thereto. The apparatus may be a smear preparation apparatus for preparing a smear of a whole blood sample, or may be a urine sediment analyzer for analyzing the urine sediment. The whole blood and the urine that contains particle components can be used for the sample.

## Claims

1. A sample processing apparatus (1) comprising
an agitating means (25) for agitating a sample in a sample tube (101; 103);
a processing means (3) for processing the agitated sample;
a controlling means (5) for controlling at least the agitating operation; and
an identifying means (45a) for identifying a type of a sample tube (101; 103);
wherein the controlling means (5) is configured to control the agitating means (25) according to the type of sample tube (101; 103), to agitate a sample in a first type of sample tube (101) under a first agitation condition, and to control the agitating means (25) to agitate a sample in a second type of sample tube (103), which contains a sample of lower volume than the first type of sample tube, under a second agitation condition different from the first agitation condition;
the first type of sample tube (101) differs from the second type of sample tube (103) in structure or shape, and
the identifying means (45a) is configured to identify the type of sample tube on the basis of difference in structure or shape between the first and second types of sample tubes (101; 103);
the agitating means (25) is configured to move a sample tube between an overturned state where a bottom is positioned higher than a lid of the sample tube (101; 103) and an upright state where the lid is positioned higher than the bottom; and
the controlling means (5) is configured to control the agitating means (25) to repeat a cycle in which a sample tube (101; 103) switches its state between the overturned state and the upright state at least twice, for a plurality of cycles;
**characterized in that**:
the second agitation condition includes stopping the sample tube (101; 103) for a predetermined period of time in the overturned state, and stopping the sample tube (101; 103) for a predetermined period of time in the upright state.

2. The sample processing apparatus (1) according to claim 1, **characterized in that**
the first agitation condition includes a first time period for agitation, and
the second agitation condition includes a second time period for agitation longer than the first time period.

3. The sample processing apparatus (1) according to claim 1 or 2, **characterized in that**
the first agitation condition includes a first number of times of agitation, and
the second agitation condition includes a second number of times of agitation greater than the first number of times.

4. The sample processing apparatus (1) according to claim 1, **characterized in that**
the first agitation condition includes repeating the cycle for a first time period, and
the second agitation condition includes repeating the cycle for a second time period longer than the first time period.

5. The sample processing apparatus (1) according to claim 1 or 4, **characterized in that**
the cycle is repeated for a first number of times in the first agitation condition, and
the cycle is repeated for a second number of times greater than the first number of times in the second agitation condition.

6. The sample processing apparatus (1) according to any one of claims 1, 4 and 5, **characterized in that**
the cycle in the first agitation condition is performed in a first time period, and
the cycle in the second agitation condition is performed in a second time period longer than the first time period.

7. The sample processing apparatus (1) according to claim 1, **characterized in that**
the identifying means (45a) includes a reading means for reading identification information given to the sample tube (101; 103) and is configured to identify the type of sample tube on the basis of the identification information read by the reading means.

8. The sample processing apparatus (1) according to claim 1 or 7, further comprising a transporting means for transporting a sample rack holding one or more the sample tubes; and **characterized in that**
the identifying means is configured to acquire information of the sample rack transported by the transporting means and to identify the type of sample tube (101; 103) held in the sample rack on the basis of the information acquired from the sample rack.

9. The sample processing apparatus (1) according to any one of claims 1, and 4 to 8, **characterized in that**
the agitating means (25) includes a take-out means for taking out the sample tube from the sample rack, agitates the sample tube taken out.

10. The sample processing apparatus (1) according to any one of claims 1 to 9, further comprising an aspirating means for aspirating a sample with a pipette, and **characterized in that**
the aspirating means is configured to pass the pipette through a lid of the agitated sample tube to aspirate the sample within the sample tube by the pipette; and
the processing means is configured to process the sample aspirated with the aspirating means.

11. A sample processing method employing a sample processing apparatus according to any of the preceding claims, the sample processing method comprising:
determining a type of a sample tube;
agitating a sample in the sample tube under a first agitation condition using the sample processing apparatus when the sample tube is a first type of sample tube;
agitating the sample in the sample tube under a second agitation condition using the sample processing apparatus when the sample tube is a second type of sample tube containing a lower volume of sample than the first type of sample tube; and processing the agitated sample,
moving a sample tube between an overturned state where a bottom is positioned higher than a lid of the sample tube and an upright state where the lid is positioned higher than the bottom; and
controlling the agitating means to repeat a cycle in which a sample tube switches its state between the overturned state and the upright state at least twice, for a plurality of cycles,
**characterized in that**:
the sample processing method further comprises stopping the sample tube for a predetermined period of time in the overturned state, and stopping the sample tube (101; 103) for a predetermined period of time in the upright state.

## Patentansprüche

1. Probenverarbeitungsvorrichtung (1), umfassend
ein Rührmittel (25) zum Rühren einer Probe in einem Probenröhrchen (101; 103); ein Verarbeitungsmittel (3) zum Verarbeiten der gerührten Probe;
ein Steuerungsmittel (5) zum Steuern zumindest des Rührvorgangs; und
ein Identifizierungsmittel (45a) zum Identifizieren eines Typs eines Probenröhrchens (101; 103);
wobei das Steuerungsmittel (5) konfiguriert ist, um das Rührmittel (25) anhand des Typs des Probenröhrchens (101; 103) zu steuern, um eine Probe in einem ersten Typ des Probenröhrchens (101) unter einer ersten Rührbedingung zu rühren, und um das Rührmittel (25) zu steuern, um eine Probe in einem zweiten Typ des Probenröhrchens (103), das eine Probe mit einem geringeren Volumen als der erste Typ des Probenröhrchens enthält, unter einer zweiten Rührbedingung, die sich von der ersten Rührbedingung unterscheidet, zu rühren;
der erste Typ des Probenröhrchens (101) sich von dem zweiten Typ des Probenröhrchens (103) in der Struktur oder Form unterscheidet, und
das Identifizierungsmittel (45a) konfiguriert ist, um den Typ des Probenröhrchens auf der Grundlage von Unterschieden in der Struktur oder Form zwischen dem ersten und dem zweiten Typ des Probenröhrchens (101; 103) zu identifizieren;
das Rührmittel (25) konfiguriert ist, um ein Probenröhrchen zwischen einem umgedrehten Zustand, in dem ein Boden höher positioniert ist als ein Deckel des Probenröhrchens (101; 103), und einem aufrechten Zustand, in dem der Deckel höher positioniert ist als der Boden, zu bewegen; und
das Steuerungsmittel (5) konfiguriert ist, um das Rührmittel (25) zu steuern, um einen Zyklus zu wiederholen, in dem ein Probenröhrchen (101; 103) seinen Zustand zwischen dem umgedrehten Zustand und dem aufrechten Zustand mindestens zweimal für eine Vielzahl von Zyklen wechselt;
**dadurch gekennzeichnet, dass**:
die zweite Rührbedingung das Anhalten des Probenröhrchens (101; 103) für eine vorbestimmte Zeitspanne in dem umgedrehten Zustand und das Anhalten des Probenröhrchens (101; 103) für eine vorbestimmte Zeitspanne in dem aufrechten Zustand einschließt.

2. Probenverarbeitungsvorrichtung (1) nach Anspruch 1, **dadurch gekennzeichnet, dass**
die erste Rührbedingung eine erste Zeitspanne für das Rühren einschließt, und die zweite Rührbedingung eine zweite Zeitspanne für das Rühren einschließt, die länger ist als die erste Zeitspanne.

3. Probenverarbeitungsvorrichtung (1) nach Anspruch 1 oder 2, **dadurch gekennzeichnet, dass**
die erste Rührbedingung eine erste Rühranzahl einschließt, und
die zweite Rührbedingung eine zweite Rühranzahl einschließt, die größer ist als die erste Rühranzahl.

4. Probenverarbeitungsvorrichtung (1) nach Anspruch 1, **dadurch gekennzeichnet, dass**
die erste Rührbedingung das Wiederholen des Zyklus für eine erste Zeitspanne einschließt, und
die zweite Rührbedingung das Wiederholen des Zyklus für eine zweite Zeitspanne einschließt, die länger als die erste Zeitspanne ist.

5. Probenverarbeitungsvorrichtung (1) nach Anspruch 1 oder 4, **dadurch gekennzeichnet, dass**
der Zyklus für eine erste Anzahl von Malen in der ersten Rührbedingung wiederholt wird, und
der Zyklus für eine zweite Anzahl von Malen wiederholt wird, die größer als die erste Anzahl von Malen in der zweiten Rührbedingung ist.

6. Probenverarbeitungsvorrichtung (1) nach einem der Ansprüche 1, 4 und 5, **dadurch gekennzeichnet, dass**
der Zyklus in der ersten Rührbedingung in einer ersten Zeitspanne durchgeführt wird, und
der Zyklus in der zweiten Rührbedingung in einer zweiten Zeitspanne, die länger als die erste Zeitspanne ist, durchgeführt wird.

7. Probenverarbeitungsvorrichtung (1) nach Anspruch 1, **dadurch gekennzeichnet, dass**
das Identifizierungsmittel (45a) ein Lesemittel zum Lesen von Identifizierungsinformationen, die dem Probenröhrchen (101; 103) verliehen wurden, einschließt und konfiguriert ist, um den Typ des Probenröhrchens auf der Grundlage der von dem Lesemittel gelesenen Identifizierungsinformationen zu identifizieren.

8. Probenverarbeitungsvorrichtung (1) nach Anspruch 1 oder 7, weiter umfassend ein Transportmittel zum Transportieren eines Probengestells, das ein oder mehrere der Probenröhrchen trägt; und **dadurch gekennzeichnet, dass**
das Identifizierungsmittel konfiguriert ist, um Informationen des von dem Transportmittel transportierten Probengestells zu erfassen und den Typ des in dem Probengestell gehaltenen Probenröhrchens (101; 103) auf der Grundlage der von dem Probengestell erfassten Informationen zu identifizieren.

9. Probenverarbeitungsvorrichtung (1) nach einem der Ansprüche 1 und 4 bis 8, **dadurch gekennzeichnet, dass**
das Rührmittel (25) ein Entnahmemittel zum Entnehmen des Probenröhrchens aus dem Probengestell, welches das entnommene Probenröhrchen rührt, einschließt.

10. Probenverarbeitungsvorrichtung (1) nach einem der Ansprüche 1 bis 9, weiter umfassend ein Ansaugmittel zum Ansaugen einer Probe mit einer Pipette, und **dadurch gekennzeichnet, dass**
das Ansaugmittel konfiguriert ist, um die Pipette durch einen Deckel des gerührten Probenröhrchens zum Ansaugen der Probe innerhalb des Probenröhrchens durch die Pipette zu führen; und
das Verarbeitungsmittel konfiguriert ist, um die mit dem Ansaugmittel angesaugte Probe zu verarbeiten.

11. Probenverarbeitungsverfahren unter Verwendung einer Probenverarbeitungsvorrichtung nach einem der vorstehenden Ansprüche, wobei das Probenverarbeitungsverfahren Folgendes umfasst:
Bestimmen eines Typs eines Probenröhrchens;
Rühren einer Probe in dem Probenröhrchen unter einer ersten Rührbedingung unter Verwendung der Probenverarbeitungsvorrichtung, wenn das Probenröhrchen ein erster Typ von Probenröhrchen ist;
Rühren der Probe in dem Probenröhrchen unter einer zweiten Rührbedingung unter Verwendung der Probenverarbeitungsvorrichtung, wenn es sich bei dem Probenröhrchen um einen zweiten Typ von Probenröhrchen handelt, der ein geringeres Volumen der Probe enthält als der erste Typ von Probenröhrchen; und Verarbeiten der gerührten Probe,
Bewegen eines Probenröhrchens zwischen einem umgedrehten Zustand, in dem ein Boden höher als ein Deckel des Probenröhrchens positioniert ist, und einem aufrechten Zustand, in dem der Deckel höher als der Boden angeordnet ist; und
Steuern des Rührmittels, um einen Zyklus zu wiederholen, in dem ein Probenröhrchen seinen Zustand zwischen dem umgedrehten Zustand und dem aufrechten Zustand mindestens zweimal für eine Vielzahl von Zyklen wechselt,
**dadurch gekennzeichnet, dass**:
das Probenverarbeitungsverfahren weiter das Anhalten des Probenröhrchens für eine vorbestimmte Zeitspanne in dem umgedrehten Zustand und das Anhalten des Probenröhrchens (101; 103) für eine vorbestimmte Zeitspanne in dem aufrechten Zustand umfasst.

## Revendications

1. Appareil de traitement d'échantillons (1) comprenant
un moyen d'agitation (25) pour agiter un échantillon dans un tube d'échantillon (101 ; 103) ;
un moyen de traitement (3) pour traiter l'échantillon agité ;
un moyen de commande (5) pour commander au moins l'opération d'agitation ; et un moyen d'identification (45a) pour identifier un type d'un tube d'échantillon (101; 103) ;
dans lequel le moyen de commande (5) est configuré pour commander le moyen d'agitation (25) selon le type de tube d'échantillon (101 ; 103), pour agiter un échantillon dans un premier type de tube d'échantillon (101) sous une première condition d'agitation, et pour commander le moyen d'agitation (25) pour agiter un échantillon dans un second type de tube d'échantillon (103), qui contient un échantillon de volume inférieur que le premier type de tube d'échantillon, sous une seconde condition d'agitation différente de la première condition d'agitation ;
le premier type de tube d'échantillon (101) diffère du second type de tube d'échantillon (103) en structure ou en forme, et
le moyen d'identification (45a) est configuré pour identifier le type de tube d'échantillon sur la base de différence en structure ou en forme entre les premier et second types de tubes d'échantillon (101 ; 103) ;
le moyen d'agitation (25) est configuré pour déplacer un tube d'échantillon entre un état renversé où un fond est positionné plus haut qu'un couvercle du tube d'échantillon (101 ; 103) et un état droit où le couvercle est positionné plus haut que le fond ; et
le moyen de commande (5) est configuré pour commander le moyen d'agitation (25) pour répéter un cycle dans lequel un tube d'échantillon (101 ; 103) commute son état entre l'état renversé et l'état droit au moins deux fois, pour une pluralité de cycles ;
**caractérisé en ce que** :
la seconde condition d'agitation inclut l'arrêt du tube d'échantillon (101 ; 103) pendant une période de temps prédéterminée dans l'état renversé, et l'arrêt du tube d'échantillon (101 ; 103) pendant une période de temps prédéterminée dans l'état droit.

2. Appareil de traitement d'échantillons (1) selon la revendication 1, **caractérisé en ce que**
la première condition d'agitation inclut une première période de temps pour l'agitation, et
la seconde condition d'agitation inclut une seconde période de temps pour une agitation plus longue que la première période de temps.

3. Appareil de traitement d'échantillons (1) selon la revendication 1 ou 2, **caractérisé en ce que**
la première condition d'agitation inclut un premier nombre de fois d'agitation, et la seconde condition d'agitation inclut un second nombre de fois d'agitation supérieur au premier nombre de fois.

4. Appareil de traitement d'échantillons (1) selon la revendication 1, **caractérisé en ce que**
la première condition d'agitation inclut la répétition du cycle pendant une première période de temps, et
la seconde condition d'agitation inclut la répétition du cycle pendant une seconde période de temps plus longue que la première période de temps.

5. Appareil de traitement d'échantillons (1) selon la revendication 1 ou 4, **caractérisé en ce que**
le cycle est répété un premier nombre de fois dans la première condition d'agitation, et
le cycle est répété un second nombre de fois supérieur au premier nombre de fois dans la seconde condition d'agitation.

6. Appareil de traitement d'échantillons (1) selon l'une quelconque des revendications 1, 4 et 5, **caractérisé en ce que**
le cycle dans la première condition d'agitation est effectué dans une première période de temps, et
le cycle dans la seconde condition d'agitation est effectué dans une seconde période de temps plus longue que la première période de temps.

7. Appareil de traitement d'échantillons (1) selon la revendication 1, **caractérisé en ce que**
le moyen d'identification (45a) inclut un moyen de lecture pour lire des informations d'identification données au tube d'échantillon (101; 103) et est configuré pour identifier le type de tube d'échantillon sur la base des informations d'identification lues par le moyen de lecture.

8. Appareil de traitement d'échantillons (1) selon la revendication 1 ou 7, comprenant en outre un moyen de transport pour transporter un porte-échantillons contenant les un ou plusieurs tubes d'échantillon ; et **caractérisé en ce que**
le moyen d'identification est configuré pour obtenir des informations du porte-échantillons transporté par le moyen de transport et pour identifier le type de tube d'échantillon (101 ; 103) contenu dans le porte-échantillons sur la base des informations obtenues à partir du porte-échantillons.

9. Appareil de traitement d'échantillons (1) selon l'une quelconque des revendications 1, et 4 à 8, **caractérisé en ce que**
le moyen d'agitation (25) inclut un moyen de retrait pour retirer le tube d'échantillon du porte-échantillons, agite le tube d'échantillon retiré.

10. Appareil de traitement d'échantillons (1) selon l'une quelconque des revendications 1 à 9, comprenant en outre un moyen d'aspiration pour aspirer un échantillon avec une pipette, et **caractérisé en ce que**
le moyen d'aspiration est configuré pour faire passer la pipette à travers un couvercle du tube d'échantillon agité pour aspirer l'échantillon à l'intérieur du tube d'échantillon par la pipette ; et
le moyen de traitement est configuré pour traiter l'échantillon aspiré avec le moyen d'aspiration.

11. Procédé de traitement d'échantillons utilisant un appareil de traitement d'échantillons selon l'une quelconque des revendications précédentes, le procédé de traitement d'échantillons comprenant les étapes consistant à :
déterminer un type d'un tube d'échantillon ;
agiter un échantillon dans le tube d'échantillon sous une première condition d'agitation en utilisant l'appareil de traitement d'échantillons lorsque le tube d'échantillon est un premier type de tube d'échantillon ;
agiter l'échantillon dans le tube d'échantillon sous une seconde condition d'agitation en utilisant l'appareil de traitement d'échantillons lorsque le tube d'échantillon est un second type de tube d'échantillon contenant un volume d'échantillon inférieur au premier type de tube d'échantillon ; et traiter l'échantillon agité,
déplacer un tube d'échantillon entre un état renversé où un fond est positionné plus haut qu'un couvercle du tube d'échantillon et un état droit où le couvercle est positionné plus haut que le fond ; et
commander le moyen d'agitation pour répéter un cycle dans lequel un tube d'échantillon commute son état entre l'état renversé et l'état droit au moins deux fois, pour une pluralité de cycles,
**caractérisé en ce que** :
le procédé de traitement d'échantillons comprend en outre les étapes consistant à arrêter le tube d'échantillon pendant une période de temps prédéterminée dans l'état renversé, et à arrêter le tube d'échantillon (101; 103) pendant une période de temps prédéterminée dans l'état droit.
